Europäisches Patentamt

European Patent Office

Office européen des brevets

(19)

(11) Veröffentlichungsnummer: **0 154 657**
**A1**

## (12) EUROPÄISCHE PATENTANMELDUNG

(21) Anmeldenummer: 84102649.5

(22) Anmeldetag: 10.03.84

(51) Int. Cl.⁴: **G 01 F 1/08,** G 01 F 1/07

(43) Veröffentlichungstag der Anmeldung: 18.09.85
Patentblatt 85/38

(84) Benannte Vertragsstaaten: AT CH DE FR GB IT LI NL SE

(71) Anmelder: **GWF Gas- & Wassermesserfabrik AG,**
**Obergrundstrasse 119, CH-6002 Luzern (CH)**

(72) Erfinder: **Becker, Robert, Pariser Strasse 94,**
**D-6501 Nieder-Olm (DE)**

(74) Vertreter: **Meyer, Reinhard, Dipl.-Ing., c/o Dr. A. R. Egli &**
**Co. Patentanwälte Horneggstrasse 4, CH-8008 Zürich**
**(CH)**

(54) Zähler für die Messung eines durch eine Rohrleitung fliessenden Fluides.

(57) Der Zähler (1) weist einen, in das Gehäuse (2) eingesetzten Flügelbecher (7) für die Führung des durchfließenden Fluides auf. Das Fluid tritt durch eine Eintrittsöffnung (23) durch Einlaufkanäle (26, 27) in den Innenraum (28) des Flügelbechers (7). Beim Durchfließen durch das Flügelrad (9) wird dasselbe in Drehung versetzt, wobei die Drehzahl des Flügelrades (9) durch ein auf dem Gehäuse (2) aufgesetztes Zählwerk (11) registriert wird. Das Fluid verläßt den Innenraum (28) durch Ablaufkanäle (29) und eine Austrittsöffnung (31). Beim Eintritt in den Innenraum ist eine Staurippe (8) angeordnet, die einen Rand (35) mit schrägen Rampenteilen (36) aufweist. Durch Verstellen der Staurippe (8) gegenüber dem Flügelbecher (7) kann die Anpassung des Zählwerkes (1) problemlos an die jeweilige Durchflußmenge erreicht werden.

Zähler für die Messung eines durch eine Rohrleitung
fliessenden Fluides

---

Die Erfindung betrifft einen Zähler für die Messung einer
durch eine Rohrleitung fliessenden Menge eines Fluides, der
ein Gehäuse aufweist, in dem für die Führung des Fluides
ein mindestens einen Einlaufkanal und einen Auslaufkanal
aufweisenden Flügelbecher eingesetzt ist, in dem ein
Flügelrad drehbar gelagert ist, dessen Drehzahl an einem,
auf dem Gehäuse aufgesetzten Zählwerk als Mass der durchfliessenden Fluidmenge gezählt und summiert wird.

Wasserzähler sind in verschiedenen Ausführungen bekannt.
Hierbei stellt sich die Aufgabe, die durchfliessende Fluidmenge möglichst genau über einen möglichst grossen Bereich
messen zu können. Bei einem bekannten Wasserzähler wird die
Messung der durchfliessenden Wassermenge als Teilstrom
gemessen, wobei der Bypass die Möglichkeit bietet, durch
Regulierung desselben die Drehzahl des Flügelrades anzupassen und damit auf das Zählwerk abzustimmen. Nachteilig
ist hierbei, dass insbesondere bei kleinen Durchflussmengen
der Anteil der Energie des durch den Bypass strömenden
Mediums verhältnismässig gross ist. Dadurch wird der
Messbereich eingeengt, da bei kleineren Durchflussmengen
der Messfehler zu gross wird. Zudem besteht noch die Gefahr einer Verstopfung, der relativ
kleinen Bypassöffnung was ein Abwandern der Fehlerkurve zu
grösseren Anzeigewerten zur Folge hat.

Weiter sind Wasserzähler, insbesondere für kleine Durchflussmengen, bekannt, die als Einstrahlzähler ausgebildet
sind, d.h. nur einen einzigen Einlaufkanal aufweisen, dem
ein einziger Auslaufkanal nachgeordnet ist. Diese Anordnung
weist den Nachteil auf, dass das Flügelrad einer einseitigen Belastung ausgesetzt ist, weshalb in diesem Fall
der Verschleiss und auch die Reibung des FLügelrades in
seiner Lagerung grösser ist als bei Mehrstrahlzählern.

Hier setzt die Erfindung ein, der die Aufgabe zugrundeliegt, einen Zähler für die Messung einer durch eine Rohrleitung durchfliessenden Fluidmenge so auszugestalten,
dass die den Messbereich einengenden Merkmale, d.h. eine
Bypass-Regulierung und/oder eine einseitige Belastung des
Flügelrades, vermieden werden, so dass ein grosser Messbereich, jedoch mit einfacher Anpassung der Flügelraddrehzahl an die jeweilige Durchflussmenge, eingehalten
werden kann.

Diese Aufgabe wird gemäss der Erfindung dadurch gelöst,
dass der Flügelbecher einlaufseitig eine Ausnehmung zur
Aufnahme einer Staurippe aufweist, die bezüglich des
Flügelbechers zwecks Veränderung der wirksamen Einlauföffnung drehbar gelagert ist.

Die Erfindung ist in der Zeichnung in einem Ausführungsbeispiel dargestellt und nachfolgend beschrieben.
Es zeigen:

Fig. 1          einen Längsschnitt eines erfindungsgemässen Fluidzählers mit dem Zählwerk
                in der Seitenansicht,

Fig. 2 - 4      eine Darstellung des Flügelbechers des
                Zählers nach Fig. 1, wobei

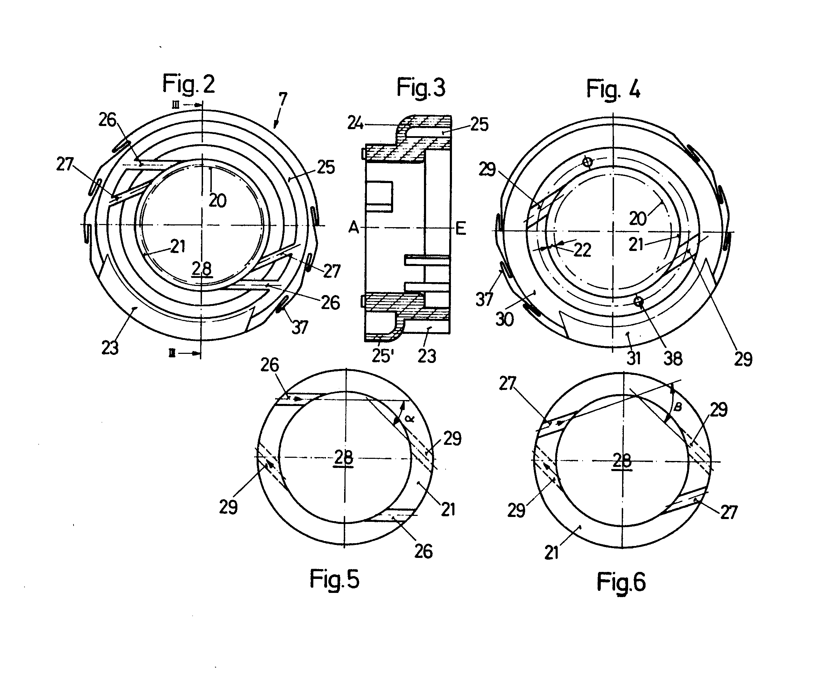

     Fig. 2     eine Ansicht von unten mit den Einlaufkanälen,

     Fig. 3     einen Vertikalschnitt längs der Linie
                III - III in Fig. 2 und

     Fig. 4     eine Ansicht von oben mit den Auslaufkanälen

                zeigt, und

Fig. 5 & 6      die gegenseitige Lage der Einlauf- und
                Auslaufkanäle im Flügelbecher nach
                Fig. 2 - 4, wobei

     Fig. 5     die einen Einlaufkanäle in ihrer Lage zu
                den beiden Auslaufkanälen und

     Fig. 6     die andern Einlaufkanäle in ihrer Lage zu
                den beiden Auslaufkanälen zeigt.

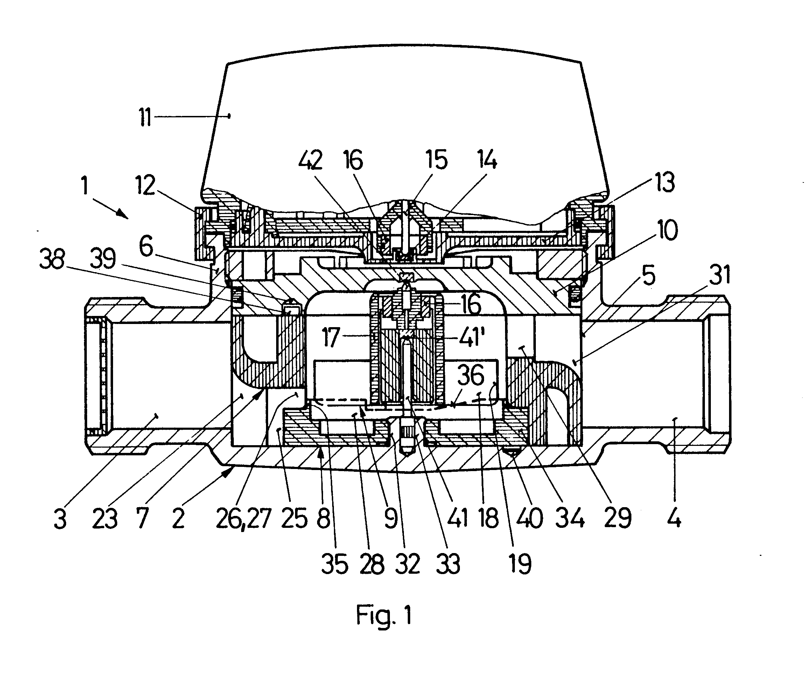

Der in Fig. 1 dargestellte Zähler 1 weist ein Gehäuse 2,
z.B. aus Metall, auf, an dem ein Einlaufstutzen 3 und
gegenüberliegend ein Auslaufstutzen 4 angeformt ist. Das
Gehäuse weist einen zylinderförmigen Innenraum 5 auf, der
über den beiden Stutzen 3, 4 durch einen Gehäusestutzen 6
gebildet wird.

Im Innenraum 5 des Gehäuses 2 ist ein als Hydraulikeinsatz
bezeichneter Einsatz eingesetzt, der sich aus einem Flügelbecher 7, einer Staurippe 8 und einem Flügelrad 9 zusammensetzt. Der Hydraulikeinsatz ist durch einen Deckel 10
vom Gehäusestutzen 6 getrennt; auf diesem ist ein Zählwerk
11 aufgesetzt, das für die Erläuterung der Erfindung nicht
wesentlich ist und deshalb nicht näher dargestellt ist. Das
Zählwerk hat die Aufgabe, die Drehzahl des Flügelrades 9 zu
zählen, zu summieren und entweder als ablesbaren Wert
darzustellen oder ein entsprechendes Signal zu erzeugen.
Das Zählwerk 11 ist mittels eines Klemmrings 12 am Gehäusestutzen 6 festgeklemmt und weist einen Boden 13 auf, in
dessen Zentrum ein Lager 14 für die Lagerung einer rotierenden Welle 15 angeordnet ist. Die Welle 15 überträgt die
Drehzahl des Flügelrades 9 auf das Zählwerk. In der in Fig.
1 dargestellten Ausführungsform des Zählers 1 wird die
Drehzahl des Flügelrades 9 berührungslos auf die Welle 15
übertragen. Die Kupplung erfolgt mit Hilfe von Permanentmagneten 16, die einerseits in der Nabe 17 des Flügelrades
9 und andererseits an der Welle 15 des Zählwerkes 11
angeordnet sind.

Das Flügelrad 9 weist eine Anzahl radial von der Nabe 17
abstehende Paletten oder Flügel 18 auf, deren freie Ränder
19 auf einem Kreis 20, siehe Fig. 2 und 4, liegen und zur
Innenwand 21 des Innenraumes 28 einen Spalt 22 bilden.

Für die gute Funktion des Zählers 1 ist die Ausbildung des Flügelbechers 7 von grosser Bedeutung. In Fig. 3 ist mit E die Eintrittsseite und mit A die Ausstrittsseite bezeichnet, während Fig. 2 die Ansicht der Eintrittsseite E und Fig. 4 die Ansicht der Austrittssteite A zeigt. Auf der Eintrittsseite E befindet sich eine Eintrittsöffnung 23 in einer Aussenwand 24 und mündet in einen Ringkanal 25. Vom Ringkanal 25 führen Einlaufkanäle 26, 27 in den durch die Innenwand 21 begrenzten Innenraum 28 des Flügelbechers 7. Wie aus Fig. 2 ersichtlich ist, sind je ein Einlaufkanal 26, 27 auf diametral gegenüberliegenden Seiten des Innenraums 28 angeordnet und münden tangential zu Kreisen mit unterschiedlichem Durchmesser in den Innenraum 28. Durch diese Anordnung der Achsen der Einlaufkanäle 26, 27 wird die Charakteristik der Fehlerkurve verbessert.

Das in den Innenraum 28 eintretende Fluid durchfliesst nun von unten nach oben durch die Paletten 18 des Flügelrades 9 auf die Austrittsseite A. Wie aus Fig. 4 ersichtlich ist, sind zwei gegenüberliegende, vom Kreis 20 tangential abgehende Ablaufkanäle 29 angeordnet, die in einen Ringraum 30 münden, der mit einer Austrittsöffnung 31 versehen ist, die gegen den Auslaufstutzen 4 mündet.

Das Fluid tritt bei der Eintrittsöffnung 23 ein, teilt sich in zwei Teilströme, die auf gegenüberliegenden Bereichen durch die Einlaufkanäle 26, 27 fliessen. Nach Durchfliessen des Flügelrades 9 und nach Zurücklegung eines verhältnismässig kleinen Teils eines Kreisbogens längs der Innenwand 21 des Flügelbechers 7 fliessen die beiden Teilströme durch die beiden, ebenfalls gegenüberliegenden Ablaufkanäle 29 in den Ringraum 30 und von dort in die Austrittsöffnung 31.

Der Weg der beiden Teilströme ist aus Fig. 5 und 6 ersichtlich, in welchen Figuren die gegenseitige Lage der Einlaufkanäle 26, 27 und der Ablaufkanäle 29 ersichtlich ist. Der Flügelbecher 7 ist hierbei nicht vollständig gezeichnet, sondern nur der Innenraum 28 und die, diesen Raum begrenzende Wand 21. Für den durch den Einlaufkanal 26 eintretenden Fluidstrom ist der Umfangswinkel bis zum Ablaufkanal 29 35 - 45°, während der entsprechende Winkel zwischen dem Einlaufkanal 27 und dem Ablaufkanal 29 75 - 85° beträgt.

Im Bereich der Einlaufkanäle 26, 27 ist die Staurippe 8 angeordnet, die als flacher tellerförmiger Einsatz ausgebildet ist. Die Staurippe 8 weist eine Bohrung 32 auf, mit welcher sie auf einen Zapfen 33 im Boden des Gehäuses 2 aufgesteckt ist. Die Staurippe 8 wird am Umfang durch einen ringförmigen Wall 34 begrenzt, auf dem ein Rand 35 aufgesetzt ist. Der Rand 35 weist schräglaufende Rampenteile 36 auf. Bei zwei Bereichen mit Einlaufkanälen 26, 27 sind zwei solcher Rampenteile 36 vorgesehen, mit denen der Querschnitt der Einlaufkanäle 26, 27 durch Drehen der Staurippe 8 gegenüber dem Flügelbecher 7 verändert werden kann. Mit den Rampenteilen 36 liegt nun ein einfaches Hilfsmittel vor, mit dem problemlos die Anpassung des Zählers an die jeweilige Fluidmenge erreicht werden kann.

Soll der Messbereich des Zählers 1 erweitert werden, können weitere Einlauf- und Ablaufkanäle vorgesehen werden. Um einen Kurzschluss zwischen dem Einlaufstutzen 3 und dem Auslaufstutzen 4 zu vermeiden, sind am Aussenumfang des Flügelbechers 7 Dichtungsleisten 37 vorgesehen, die ebenfalls auf diametral gegenüberliegenden Bereichen am Flügelbecher 7 vorgesehen sind. Die Anordnung ist hierbei derart, dass der Zulauf und der Ablauf des Fluids unbehindert bleibt.

Im Flügelbecher 7 sind zwei Zapfen 38 vorgesehen, die zum Positionieren in Bohrungen 39 des Deckels 10 passen. Eine gleiche Lagefixierung 40 ist auch für die Staurippe 8 möglich. In diesem Fall kann der Flügelbecher 7 mit Hilfe des Deckels 10 gegenüber der Staurippe 8 zur Anpassung des Zählers verdreht werden. Eine solche Einstellung ist äusserst einfach; lediglich das Zählwerk ist nach Lösen des Klemmrings 12 zu entfernen.

Das Flügelrad 9 ist auf einer Säule 41 mittels eines Spitzenlagers 41' gelagert. Ein weiteres Spitzenlager 42 ist im Deckel 10 angeordnet. Die Lagersteine dieser Lager sind beispielsweise Saphire, mit denen eine äusserst reibungsarme Lagerung des Flügelrades 9 erreicht wird, was im Hinblick auf die Messgenauigkeit bei kleineren Durchflussmengen wesentlich ist.

## Patentansprüche

1. Zähler für die Messung einer durch eine Rohrleitung fliessenden Menge eines Fluides, der ein Gehäuse aufweist, in dem für die Führung des Fluides ein mindestens einen Einlaufkanal und einen Ablaufkanal aufweisender Flügelbecher eingesetzt ist, in dem ein Flügelrad drehbar gelagert ist, dessen Drehzahl an einem, auf dem Gehäuse aufgesetzten Zählwerk als Mass der durchfliessenden Fluidmenge gezählt und summiert wird, dadurch gekennzeichnet, dass der Flügelbecher (7) einlaufseitig eine Ausnehmung zur Aufnahme einer Staurippe (8) aufweist, die bezüglich des Flügelbechers zwecks Veränderung der wirksamen Einlauföffnung drehbar gelagert ist.

2. Zähler nach Anspruch 1, dadurch gekennzeichnet, dass die Staurippe (8) einen Rand (35) mit einem geneigten Rampenteil (36) aufweist.

3. Zähler nach Anspruch 1 oder 2, dadurch gekennzeichnet, dass der Flügelbecher (7) einlaufseitig zwei gegenüberliegende, mit mindestens einem etwa tangentialen Einlaufkanal (26, 27) versehene und durch einen Ringkanal (25) verbundene Wandbereiche aufweist, zwischen denen eine Eintrittsöffnung (23) in einer Aussenwand (24) liegt.

4. Zähler nach einem der Ansprüche 1 bis 3, dadurch gekennzeichnet, dass der Flügelbecher (7) auslaufseitig zwei gegenüberliegende, mit mindestens einem etwa tangentialen Auslaufkanal (29) versehene und durch einem Ringkanal (30) verbundene Wandbereiche aufweist, zwischen denen in einer Aussenwand (25') eine in den Auslaufstutzen (4) des Gehäuses (2) mündende Austrittsöffnung (31) liegt.

5. Zähler nach Anspruch 3 oder 4, dadurch gekennzeichnet, dass der Winkel ( , ) zwischen den Richtungen des Einlaufkanals (26, 27) und des Auslaufkanals (29) 35 - 85°, vorzugsweise 45 - 75°, beträgt.

6. Zähler nach Anspruch 1, dadurch gekennzeichnet, dass der Flügelbecher (7) einen Innenraum (28) aufweist, derart, dass das darin anzuordnen bestimmte Flügelrad (9) nur Paletten (18) im Bereich des Einlaufkanls des Flügelbechers aufweist.

7. Zähler nach Anspruch 6, dadurch gekennzeichnet, dass die Richtungen des Einlaufkanals (26, 27) tangential zu unterschiedlichen Kreisen (20) verlaufen.

8. Zähler nach Anspruch 1, dadurch gekennzeichnet, dass der Flügelbecher (7) an zwei, etwa gegenüberliegenden Wandbereichen des Aussenumfangs Dichtleisten (37) aufweist, die beidseits der Eintrittsöffnung (23) bzw. der Austrittsöffnung (31) angeordnet sind.

0154657

Fig. 1

Fig. 2

7

26

27

25

20

21

28

23

37

26

27

Fig. 3

24

25

A          E

25'          23

Fig. 4

29

20

22

21

37

30

31          38          29

Fig. 5

26

29

α

28

29

21

26

Fig. 6

27

29

B

28

29          27

21

**Europäisches Patentamt**

**EUROPÄISCHER RECHERCHENBERICHT**

0154657

Nummer der Anmeldung

EP 84 10 2649

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 100 393  (ONODA et al.)<br>* Figuren; Seite 2, Zeilen 8-27 *<br><br>--- | 1 | G 01 F  1/08<br>G 01 F  1/07 |
| A | DE-A- 120 791  (BRESLAUER WASSERMESSER- UND EISENBAU-WERKE AG)<br>* Figuren; Anspruch *<br><br>--- | 1,3,6 | |
| A | EP-A-0 045 588  (BROWN BOVERI KENT LTD.)<br>* Figuren 1,3,4 *<br><br>--- | 3-7 | |
| A | DE-A- 856 527  (JÄGER)<br>* Figuren *<br><br>--- | 3-7 | |
| A | GB-A- 1 775  (TYLOR AND SONS LTD.)(A.D.1914)<br>* Seite 4, Zeile 46 - Seite 5, Zeile 2; Figuren *<br><br>--- | 1,3,6,7 | **RECHERCHIERTE SACHGEBIETE (Int. Cl.4)**<br><br>G 01 F |
| A | CH-A- 371 269  (SALAMON)<br>* Figuren; Seite 1, Zeilen 5-56 *<br><br>----- | 4-7 | |

Der vorliegende Recherchenbericht wurde für alle Patentansprüche erstellt.

| Recherchenort<br>DEN HAAG | Abschlußdatum der Recherche<br>15-11-1984 | Prüfer<br>NUIJTEN E.M. |
|---|---|---|